# EUROPEAN PATENT SPECIFICATION

(11) **EP 2 891 642 B1**
(45) Date of publication and mention of the grant of the patent: **08.11.2017**
(21) Application number: 15155104.1
(22) Date of filing: 24.02.2014
(51) Int. Cl.: C04B 41/85, B05D 7/00, C04B 41/68, C04B 41/70, C04B 41/87, C04B 41/89

(54) **Porous article**
Poröser Artikel
Article poreux

(30) Priority: 27.02.2013 JP 2013037320
(43) Date of publication of application: 08.07.2015
(62) Divisional of application: 14756477.7
(73) Proprietor: Sumitomo Osaka Cement Co., Ltd., Tokyo 102-8465 (JP)
(72) Inventor: Shigeru, Keijiro, TOKYO, Tokyo 102-8465 (JP)
(74) Representative: Cabinet Laurent & Charras

(56) References cited:
- JP-A- S61 287 477

## Description

### TECHNICAL FIELD

The present invention relates to a porous article, which is preferably produced using a porous inorganic material such as concrete, stone, or tile.

### BACKGROUND ART

In the related art, since a coating material containing silicon dioxide (SiO₂) is highly hydrophilic, a surface of an article can be prevented from being contaminated by coating the surface of the article with the coating material and drying the surface of the article or heating the surface of the article to be dried.

However, when silicon dioxide (SiO₂) alone is used, there is a problem in that alkali resistance and water resistance are poor. Therefore in order to improve alkali resistance and water resistance, various ions of magnesium, calcium, zinc, aluminum, zirconium, and the like are added to silicon dioxide (SiO₂). Among these, in particular, zirconium ions are effective for improving alkali resistance and water resistance.

As the coating material, for example, a hydrophilic coating material represented by LiₐNa_{b}K_{c}(SiOₘ)ₓ(ZrOₙ)_{y}(H₂O)_{z} (wherein a, b, c, and z each independently represent an arbitrary number, m and n each independently represent a natural number in a range of 1 to 4, and x+y=1) is disclosed (refer to PTL 1: JP 4131534).

This hydrophilic coating material contains a zirconia (ZrOₙ) component in addition to silicon dioxide (SiO₂) and alkali metal and thus exhibits superior alkali resistance and water resistance.

In addition, as a method of forming a coating film on a surface of an article, for example, a laminated film forming method is disclosed in which a zirconium-containing silicic acid layer as a first layer is formed on a surface of an article and an alkaline silicate layer as a second layer is formed on the zirconium-containing silicic acid layer (refer to PTL 2: JP4012939).

### DISCLOSURE OF INVENTION

### Technical Problem

However, when a surface of a porous body is coated with the coating material disclosed in PTL 1, there is an extremely difficult problem to solve in that, even if the liquid coating material is absorbed in holes, shrink holes are formed after a solvent contained in the coating material is evaporated. When the holes are formed on the surface of the porous body, a contaminant is incorporated into the holes. As a result, there is a problem in that, even if the surface is hydrophilic, the contaminant cannot be removed from the surface.

In addition, when the thickness of a coating film is increased, the holes can be covered, but a crack or a rupture may be formed on the coating film.

In addition, when the thickness of the coating film is large, there is a problem in that a texture of the surface of the porous body which is a substrate deteriorates.

In addition, typically, a resin such as silicone is also used as the coating material. However, a resin such as silicone has a problem of slipperiness when being used as a floor material.

Further, such a coating technique is generally called a sol-gel method and is suitable for heating and curing. However, when a porous material, in particular, concrete is coated, heating is extremely difficult to be performed. Therefore, a curing method which is performed at room temperature is desired.

On the other hand, in the laminated film forming method disclosed in PTL 2, the alkaline silicate layer as the second layer that is formed on the zirconium-containing silicic acid layer contains a large amount of silicon component. Therefore, there is a problem in that the alkali resistance of the alkaline silicate layer as the second layer is poor.

Further, in the related art, a zirconia component is superior in alkali resistance but is not superior in acid resistance. In particular, in a case where high alkali resistance is required, when the content of a zirconia component is high, the following problem occurs. Typically, a material containing a zirconia component produces a stable compound when being heated to 200°C or higher and exhibits acid resistance. However, when a porous material which cannot be necessarily heated to 200°C or higher is heated, the acid resistance deteriorates.

When an appropriate silicic acid component is added to a coating material containing a zirconia component as a major component, acid resistance is improved. However, when water is used as a solvent of the coating material, the zirconia component and the silicic acid component are immediately precipitated, which causes a problem in coating. By using an organic solvent as the solvent, the precipitation of the zirconia component and the silicic acid component is avoidable. However, when a porous material which is not suitable for the use of an organic acid from various points of view including environmental conditions is used, there is a problem.

In addition, a thin film formed of this coating material is extremely thin and thus is not sufficient for covering the holes of a porous material. Accordingly, substantially no effect of preventing contamination can be expected from this thin film.

The present invention has been made in consideration of the above-described circumstances, and an object thereof is to provide a porous article. Said porous article is herein described as well as a method of producing the same, in which water is used as a solvent, a production treatment thereof can be performed at room temperature or a relatively low temperature of 100°C or lower. Said porous article has a superior effect of preventing surface contamination, and superior alkali resistance and acid resistance.

### Solution to Problem

As a result of thorough investigation for solving the above-described problems, the present inventors have found that, when pores of a porous body are filled with a mixture and this mixture is coated with a film, a production treatment thereof can be performed at a relatively low temperature and the alkali resistance and acid resistance are superior, the porous body being formed of an inorganic material, the mixture containing metal oxide particles and an alkaline silicate, and the film containing a hydrated compound of zirconium and a silicate. Based on this finding, the present invention has been completed.

That is, according to the present invention, there is provided a porous article obtained by filling pores of at least one principal surface of a porous body with a mixture and coating the filled mixture with a film, the porous body being formed of an inorganic material, the mixture containing metal oxide particles and an alkaline silicate, and the film containing a hydrated compound of zirconium and a silicate.

The metal oxide particles are α-type aluminum oxide particles having a corundum structure; and the alkaline silicate is lithium silicate. The D50 value of a particle size distribution of the aluminum oxide particles is 0.5 µm to 5 µm; and a D90 value of the particle size distribution of the aluminum oxide particles is 3 µm or more.

A method of producing a porous article according to the invention includes: a first step of coating pores of at least a principal surface of a porous body, which is formed of an inorganic material, with a first mixed solution containing metal oxide particles, an alkaline silicate, and water to fill the pores with the first mixed solution; a second step of removing a residual first mixed solution which is not used for filling the pores; and a third step of further coating the entire surface of the porous body containing the pores, from which the residual first mixed solution is removed, with a second mixed solution containing an aqueous alkaline zirconium carbonate solution and either an aqueous silicate solution or a colloidal silica.

PLT 3 (JP61287477) discloses a method including applying an undercoat consisting of an aqueous solution of a water-soluble alkali metal silicate, for example lithium silicate, that contains a powdery solid, for instance alumina, to an inorganic porous substrate and then applying a second aqueous solution of a water-soluble alkali metal silicate to the obtained coated film, thereby forming an inorganic coating film. But PLT 3 method does not include a step of removing the excess of the first aqueous solution that was not filled in the pores and does not disclose a second aqueous solution containing an aqueous alkaline zirconium carbonate.

The metal oxide particles are α-type aluminum oxide particles having a corundum structure; the alkaline silicate is lithium silicate; and the mass ratio (aluminum oxide particles:lithium silicate:water) of aluminum oxide particles, lithium silicate, and water in the first mixed solution is (45 to 55):(2 to 8):(37 to 53). The D50 value of a particle size distribution of the aluminum oxide particles is 0.5 µm to 5 µm; and a D90 value of the particle size distribution of the aluminum oxide particles is 3 µm or more.

The second mixed solution is either a mixed solution A containing 0.5 mass% to 15 mass% of zirconium in terms of zirconium dioxide and 0.005 mass% to 7.5 mass% of silicate or colloidal silica in terms of silicon dioxide; and, when a total mass of zirconium dioxide and silicon dioxide is 100 parts by mass, the mass of silicon dioxide is 1 part by mass to 50 parts by mass.

Alternatively, the second mixed solution is a mixed solution B containing 0.005 mass% to 4.5 mass% of zirconium in terms of zirconium dioxide and 0.5 mass% to 15 mass% of silicate or colloidal silica in terms of silicon dioxide; and, when the total mass of zirconium dioxide and silicon dioxide is 100 parts by mass, the mass of zirconium dioxide is 1 part by mass to 30 parts by mass.

### Advantageous Effects of Invention

According to the present invention, there is provided a porous article obtained by filling pores of at least one principal surface of a porous body with a mixture and coating the filled mixture with a film, the porous body being formed of an inorganic material, the mixture containing metal oxide particles and an alkaline silicate, and the film containing a hydrated compound of zirconium and a silicate. Therefore, the effect of preventing surface contamination is superior, and the alkali resistance and acid resistance are also superior.

In addition, in this porous article, a production treatment thereof can be performed at room temperature or a relatively low temperature of 100°C or lower. Therefore, the production cost can be significantly reduced.

A method of producing a porous article according to the invention includes: a first step of coating pores of at least a principal surface of a porous body, which is formed of an inorganic material, with a first mixed solution containing metal oxide particles, an alkaline silicate, and water to fill the pores with the first mixed solution; a second step of removing a residual first mixed solution which is not used for filling the pores; and a third step of further coating the entire surface of the porous body containing the pores, from which the residual first mixed solution is removed, with a second mixed solution containing an aqueous alkaline zirconium carbonate solution and an aqueous silicate solution or a colloidal silica. Therefore, pores present in a porous article can be easily covered at a low cost. Accordingly, a porous article having a superior effect of preventing surface contamination and having superior alkali resistance and acid resistance can be provided.

In addition, with this method, the porous article can be produced at room temperature or at a relatively low temperature of 100°C or lower. Accordingly, the production cost can be significantly reduced.

### BEST MODE FOR CARRYING OUT THE INVENTION

Embodiments of a porous article according to the present invention and a method of producing the same will be described.

The following embodiments are specific examples for making the scope of the present invention easy to understand. Unless specified otherwise, the present invention is not limited to these embodiments.

### [Porous Article]

A porous article according to the embodiment is obtained by filling pores of at least one principal surface of a porous body with a mixture and coating the filled mixture with a film, the porous body being formed of an inorganic material, the mixture containing metal oxide particles and an alkaline silicate, and the film containing a hydrated compound of zirconium and a silicate.

This porous body is not limited as long as it has a shape formed of a porous inorganic material. For example, particularly, as a porous body which has low acid resistance and is likely to be contaminated, concrete, stone, or tile can be used.

A number of pores are formed on one surface (at least one principal surface) or the entire surface of the porous body. The opening size of the pore is preferably 1 mm or less. Here, it is not preferable that the opening size be more than 1 mm because the pores are not sufficiently filled with the mixture containing metal oxide particles and an alkaline silicate.

The pores are filled with a mixture containing metal oxide particles and an alkaline silicate.

The metal oxide particles are α-type aluminum oxide particles having a corundum structure. A particle size distribution of the corundum particles can be measured using a light transmission type particle size distribution analyzer.

Here, a D50 value denotes a particle size obtained when a cumulative number of particles accumulated from the lower limit of a particle size in the particle size distribution is 50% of the total number of particles, and a D90 value denotes a particle size obtained when the cumulative number of particles accumulated from the lower limit of the particle size in the particle size distribution is 90% of the total number of particles.

The D50 value of the particle size distribution of the corundum particles is 0.5 µm to 5 µm and preferably 0.8 µm to 3 µm, and the D90 value thereof is 3 µm or more and preferably 5 µm or more.

Here, the reason for controlling the particle size distribution of the corundum particles to be within the above-described range is as follows. When the D50 value is less than 0.5 µm because, when a coating solution is prepared using the corundum particles, the viscosity increases and it is difficult to perform coating. To deal with this, if water is added to easily perform coating, a coated film is significantly shrunk by drying, and thus a hole or a rupture may be formed on the obtained film. On the other hand, when the D50 value is more than 5 µm, the filling of the corundum particles is not sufficient, and the effects may not be sufficiently exhibited.

In addition, the reason for controlling the D90 value to be 3 µm or more is as follows. When the D90 value is less than 3 µm, the particle size distribution is extremely narrow, and the filling efficiency deteriorates. In order to efficiently perform filling, it is preferable that the particle size distribution be wide. In addition, the reason for not setting the upper limit of the D90 value is as follows. Even if a coarse particle in which the cumulative number is 10% of the total number of particles is contained, when the other particles are fine, there is no problem in filling, and the coarse particle in which the cumulative number is 10% of the total number of particles can be removed in a second step described below.

As the alkaline silicate lithium silicate is used.

As the lithium silicate, a compound containing silicon oxide (SiO₂) and lithium oxide (LiO₂) at a predetermined ratio, for example, lithium silicate having a molar ratio (SiO₂/LiO₂) of 3.5 to 7.5 is preferably used.

In practice, an aqueous lithium silicate solution containing about 20 mass% of lithium silicate in terms of silicon oxide (SiO₂) is preferably used rather than lithium silicate powder from the viewpoints of stability and easy handleability.

In the mixture, a mass ratio (aluminum oxide particles:lithium silicate:water) of aluminum oxide particles, lithium silicate, and water is (45 to 55):(2 to 8):(37 to 53).

Here, the reason for controlling the mass ratio of aluminum oxide particles, lithium silicate, and water is as follows. Within this range, an effect of preventing surface contamination is superior, precipitation separation of aluminum oxide particles is small, and a mixture having superior alkali resistance and acid resistance is stably obtained. It is not preferable that the above-described mass ratio be out of the range because the contamination prevention effect is low and the obtained film is poor in smoothness.

It is preferable that the mixture contain a zirconium compound having a composition which is the same as or different from that of a zirconium composition contained in a film described below.

As this zirconium compound, for example, alkaline zirconium carbonate is preferable. As the alkaline zirconium carbonate, for example, potassium zirconium carbonate or ammonium zirconium carbonate may be used.

The mixture with which the pores are filled is coated with a film formed from a mixed solution containing an aqueous alkaline zirconium carbonate solution and either an aqueous silicate solution or a colloidal silica. This film is prepared with a method in which a zirconium compound permeates the mixture containing metal oxide particles and an alkaline silicate during coating so as to form a zirconium silicate hydrate which is superior in both alkali resistance and acid resistance.

As the alkaline zirconium carbonate, for example, potassium zirconium carbonate or ammonium zirconium carbonate may be used.

To the film forming solution containing an aqueous alkaline zirconium carbonate solution and either an aqueous silicate solution or a colloidal silica, an organic compound such as a surfactant may be added within a range not impairing properties of the film.

### [Method of Producing Porous Article]

A method of producing a porous article according to the embodiment includes: a first step of coating pores of at least a principal surface of a porous body, which is formed of an inorganic material, with a first mixed solution containing metal oxide particles, an alkaline silicate, and water to fill the pores with the first mixed solution; a second step of removing a residual first mixed solution which is not used for filling the pores; and a third step of further coating the entire surface of the porous body containing the pores, from which the residual first mixed solution is removed, with a second mixed solution containing an aqueous alkaline zirconium carbonate solution and an aqueous silicate solution or a colloidal silica.

Next, this production method will be described in detail.

### [First Step]

In this step, pores of at least a principal surface of a porous body, which is formed of an inorganic material, are coated with a first mixed solution containing metal oxide particles, an alkaline silicate, and water to fill the pores with the first mixed solution.

Here, it is preferable that, before being coated with the first mixed solution, a coating surface of the porous body be washed with water, an organic solution, or the like in advance to obtain a clean surface from the viewpoint of adhesion when being coated with the coating solution.

As the metal oxide particles used in the first mixed solution, α-type aluminum oxide particles having a corundum structure, that is, so-called corundum particles are used. A D50 value of the particle size distribution of the corundum particles is 0.5 µm to 5 µm and preferably 0.8 µm to 3 µm, and a D90 value thereof is 3 µm or more and preferably 5 µm or more.

In the first mixed solution, a mass ratio (corundum particles:lithium silicate:water) of corundum particles, lithium silicate, and water is (45 to 55):(2 to 8):(37 to 53).

Here, the reason for controlling the mass ratio of corundum particles to be 40 to 50 is as follows. When the mass ratio of corundum particles is less than 40, an opening during drying increases, and a sufficient filling property is not obtained. On the other hand, when the mass ratio of corundum particles is more than 60, the fluidity of the mixed solution is poor, and sufficient permeability to the pores is not obtained.

In addition, the reason for controlling the mass ratio of lithium silicate to be 1 to 10 is as follows. When the mass ratio of lithium silicate is less than 1, water resistance is not sufficiently obtained. On the other hand, when the mass ratio of lithium silicate is more than 10, a residual mixed solution which does not permeate the pores is dried and cured, and it is difficult to remove the cured residual mixed solution.

Further, the reason for controlling the mass ratio of water to be 30 to 59 is as follows. When the mass ratio of water is less than 30, the fluidity of the mixed solution is poor, and sufficient permeability to the pores is not obtained. On the other hand, when the mass ratio of water is more than 59, an opening during drying increases, and a sufficient filling property is not obtained.

A mixing method used for preparing the first mixed solution is not particularly limited as long as corundum particles, lithium silicate, and water can be mixed. However, for example, a ball mill, various stirrers, or a mixer may be used.

During this mixing, the above-described surfactant and the like may be appropriately added in order to improve particle dispersibility and coating properties.

A method of coating the pores of the porous body with the first mixed solution is not particularly limited as long as the pores can be reliably filled with the mixed solution. However, for example, a coating method using a roller or a coating method using a tool such as a brush or a spatula may be used.

### [Second Step]

When the pores of the porous body are coated with the above-described first mixed solution, a residual first mixed solution which is not used for filling the pores is removed.

As a method of removing the residual first mixed solution, for example, a wiping method, a rubbing method using a squeegee or the like, or a suction method may be used.

### [Third Step]

In this step, the entire surface of the porous body containing the pores, from which the residual first mixed solution is removed, is further coated with a second mixed solution containing an aqueous alkaline zirconium carbonate solution and an aqueous silicate solution or a colloidal silica.

As the second mixed solution, the following two kinds of mixed solutions are preferably used.

### (1) mixed solution A

A mixed solution A contains 0.5 mass% to 15 mass% of zirconium in terms of zirconium dioxide and 0.005 mass% to 7.5 mass% of silicate or colloidal silica in terms of silicon dioxide and, when a total mass of zirconium dioxide and silicon dioxide is 100 parts by mass, a mass of silicon dioxide is 1 part by mass to 50 parts by mass.

### (2) mixed solution B

A mixed solution B contains 0.005 mass% to 4.5 mass% of zirconium in terms of zirconium dioxide and 0.5 mass% to 15 mass% of silicate or colloidal silica in terms of silicon dioxide, and when the total mass of zirconium dioxide and silicon dioxide is 100 parts by mass, a mass of zirconium dioxide is 1 part by mass to 30 parts by mass.

In the mixed solutions A and B, it is not preferable that the mass ratio of zirconium dioxide and the mass ratio of silicon dioxide are in an intermediate range of the above-described ratios, that is, it is not preferable that, when a total mass of zirconium dioxide and silicon dioxide is 100 parts by mass, a mass of silicon dioxide be in a range of more than 50 parts by mass to less than 70 parts by mass. This is because, in this range, the state of the mixed solution is unstable, precipitation is likely to occur, and it is difficult to perform coating. In a range other than the above intermediate range, that is, with the composition of the above-described mixed solution A or B, the mixed solution is stable for a long period of time and coating is suitably performed.

When the mixed solution containing an aqueous alkaline zirconium carbonate solution and an aqueous silicate solution or a colloidal silica is prepared, the following method may be adopted. For example, an aqueous solution containing 20 wt% of commercially available alkaline zirconium carbonate in terms of zirconium dioxide is diluted with water using a stirring mixer or the like to prepare an aqueous solution containing 0.5 wt% to 15 wt% or 0.005 mass% to 7.5 mass% of alkaline zirconium carbonate in terms of zirconium dioxide. To this aqueous solution, 0.005 mass% to 4.5 mass% or 0.5 mass% to 15 mass% of an aqueous silicate solution or a colloidal silica is added in terms of silicon dioxide to prepare the mixed solution A containing 1 part by mass to 50 parts by mass of silicon dioxide when a total mass of zirconium dioxide and silicon dioxide is 100 parts by mass or to prepare the mixed solution B containing 1 part by mass to 30 parts by mass of zirconium dioxide when a total mass of zirconium dioxide and silicon dioxide is 100 parts by mass.

As the silicate, water-soluble salts of various alkaline silicates such as sodium silicate, potassium silicate, and lithium silicate may be used.

Here, in the mixed solution A, the content of a silicate or a colloidal silica is preferably 0.005 mass% to 7.5 mass% in terms of silicon dioxide.

It is not preferable that the amount of silicate or colloidal silica be less than 0.005 mass% in terms of silicon dioxide because the effect of acid resistance is not obtained. On the other hand, it is also not preferable that the content of a silicate or a colloidal silica be more than 7.5 mass% in terms of silicon dioxide because the viscosity of the obtained mixed solution rapidly increases and coating may not be performed.

In addition, it is preferable that, when a total mass of zirconium dioxide and silicon dioxide is 100 parts by mass, a mass of silicon dioxide be 1 part by mass to 50 parts by mass.

It is not preferable that the mass of silicon dioxide be less than 1 part by mass because sufficient acid resistance is not obtained. On the other hand, it is also not preferable that the mass of silicon dioxide be more than 50 parts by mass because the mixed solution is thickened, the viscosity excessively increases, and coating may not be performed.

Here, in the mixed solution B, the content of a silicate or a colloidal silica is preferably 0.5 mass% to 15 mass% in terms of silicon dioxide.

It is not preferable that the content of a silicate or a colloidal silica be less than 0.5 mass% in terms of silicon dioxide because the effect of acid resistance is not obtained. On the other hand, it is also not preferable that the content of a silicate or a colloidal silica be more than 15 mass% in terms of silicon dioxide because the viscosity of the obtained mixed solution rapidly increases and coating may not be performed.

In addition, it is preferable that, when the total mass of zirconium dioxide and silicon dioxide is 100 parts by mass, the mass of zirconium dioxide be 1 part by mass to 30 parts by mass.

It is not preferable that the mass of zirconium dioxide be less than 1 part by mass because sufficient acid resistance is not obtained. On the other hand, it is also not preferable that the mass of zirconium dioxide be more than 30 parts by mass because the mixed solution is thickened, the viscosity excessively increases, and coating may not be performed.

In order to improve coating properties, the surfactant, the water-soluble organic resin, and the like described above are appropriately added to the mixed solutions A and B.

In order to allow the first mixed solution, with which the pores of the porous body are filled, to sufficiently chemically react with the mixed solution A or B, it is preferable that these mixed solutions be left to stand at room temperature (25°C) for about 3 days or longer. It is more preferable that these mixed solutions be held at a temperature of 50°C to 100°C using a thermostatic bath or a heating device to accelerate the chemical reaction.

Due to this chemical reaction, a film containing a zirconium silicate hydrate which is superior in both alkali resistance and acid resistance is formed on the entire surface of the porous body containing the pores.

Through the above-described steps, the porous article according to the embodiment can be produced.

As described above, according to the embodiment, there is provided a porous article obtained by filling pores of at least one principal surface of a porous body with a mixture and coating the filled mixture with a film, the porous body being formed of an inorganic material, the mixture containing metal oxide particles and an alkaline silicate, and the film containing a hydrated compound of zirconium and a silicate. Therefore, an effect of preventing surface contamination is superior, and the alkali resistance and acid resistance are also superior.

In addition, in this porous article, a production treatment thereof can be performed at room temperature or a relatively low temperature of 100°C or lower. Therefore, the production cost can be significantly reduced.

According to the embodiment, there is provided a method of producing a porous article, the method including: a first step of coating pores of at least a principal surface of a porous body, which is formed of an inorganic material, with a first mixed solution containing metal oxide particles, an alkaline silicate, and water to fill the pores with the first mixed solution; a second step of removing a residual first mixed solution which is not used for filling the pores; and a third step of further coating the entire surface of the porous body containing the pores, from which the residual first mixed solution is removed, with a second mixed solution containing an aqueous alkaline zirconium carbonate solution and an aqueous silicate solution or a colloidal silica. Therefore, pores present in a porous article can be easily covered at a low cost. Accordingly, a porous article having a superior effect of preventing surface contamination and having superior alkali resistance and acid resistance can be provided.

In addition, with this method, the porous article can be produced at room temperature or a relatively low temperature of 100°C or lower. Accordingly, the production cost can be significantly reduced.

### [Examples]

Hereinafter, the present invention will be described in more detail using Examples and Comparative Examples. However, the present invention is not limited to the following examples.

### [1] Acid Resistance of Concrete Block

### [Examples 1 to 5, Comparative Examples 1 to 5, and Conventional Example 1]

### A. Acid Resistance Treatment of Concrete

Concrete is porous, a sulfur-containing compound such as sulfur is likely to infiltrate pores thereof, and concrete is significantly corroded by this sulfur-containing compound. In particular, concrete is significantly deteriorated and contaminated in a spa or a sewer pipe containing a large amount of sulfur component or in a factory where an acid is handled. Therefore, the effects of the present invention have been verified using a commercially available concrete block as a porous body.

First, a first mixed solution containing metal oxide particles, alkaline silicate, and water was prepared to fill pores of the concrete block.

Here, by using particles in which D50=1 µm and D90=10 µm as corundum particles and using lithium silicate 45 (trade name, manufactured by Nippon Chemical Industrial Co., Ltd.) as lithium silicate, first mixed solutions were prepared while changing the mass ratio of corundum particles, lithium silicate, and water to various values.

Table 1 shows mass% of corundum particles, lithium silicate, and water in the first mixed solution of each of Examples 1 to 5 and Comparative Examples 1 to 4.

**[Table 1]**

| | Corundum Particles (mass%) | Lithium Silicate (mass%) | Water (mass%) |
|---|---|---|---|
| Example 1 | 50 | 1 | 49 |
| Example 2 | 50 | 5 | 45 |
| Example 3 | 50 | 10 | 40 |
| Example 4 | 40 | 5 | 55 |
| Example 5 | 60 | 5 | 35 |
| Comparative Example 1 | 50 | 0 | 50 |
| Comparative Example 2 | 50 | 12 | 38 |
| Comparative Example 3 | 30 | 5 | 65 |
| Comparative Example 4 | 70 | 5 | 25 |

Next, a surface of the concrete block was washed with water, the surface was naturally dried, and the surface of the concrete block was coated with the first mixed solution shown in Table 1 using a roller. Then, a residual first mixed solution was removed by a rubber spatula, and the surface was naturally dried. As a result, the pores of the concrete block was filled with the first mixed solution of each of Examples 1 to 5 and Comparative Examples 1 to 4, and a pore-filled concrete block of each of Examples 1 to 5 and Comparative Examples 1 to 4 was obtained.

Next, a second mixed solution containing an alkaline zirconium carbonate solution and a colloidal silica was prepared.

Here, by using potassium zirconium carbonate as alkaline zirconium carbonate and using a colloidal silica as a silicate, a mixed aqueous solution (second mixed solution) containing 10 mass% of potassium zirconium carbonate in terms of zirconium dioxide and 3 mass% of colloidal silica in terms of silicon dioxide was prepared.

Next, the above-described mixed aqueous solution was coated on a surface of the pore-filled concrete block of each of Examples 1 to 5 and Comparative Examples 1 to 4 using a roller. After coating, the surface is left to stand at room temperature for 7 days to be naturally dried. As a result, a concrete block of each of Examples 1 to 5 and Comparative Examples 1 to 4 on which a film was coated was obtained.

### B. Evaluation of Concrete Block

Regarding the concrete block of each of Examples 1 to 5 and Comparative Examples 1 to 4, the appearance and cleanness were evaluated.

### (1) Appearance

10 g of dilute sulfuric acid having a concentration of 5 mass% was dripped on the surface of the concrete block and was left to stand at room temperature (25°C) for 24 hours. Then, the appearance of the surface of the concrete block was observed to evaluate the degree of deterioration of the surface by sulfuric acid.

### (2) Cleanness

10 g of mud was attached on the surface of the concrete block and was left to stand at room temperature (25°C) for 24 hours. Then, the surface was washed with water, and whether or not mud was attached on the surface was evaluated. Here, a state where no mud remained was evaluated as "Good", and a state where even a small amount of mud remained was evaluated as "Bad".

Table 2 shows the evaluation results. A concrete block which was not subjected to pore filling and surface coating was set as Conventional Example 1.

Table 2 shows the evaluations.

**[Table 2]**

| | Appearance | Cleanness |
|---|---|---|
| Example 1 | Good | Good |
| Example 2 | Good | Good |
| Example 3 | Good | Good |
| Example 4 | Good | Good |
| Example 5 | Good | Good |
| Comparative Example 1 | Poor Pore Filling and Deterioration | Bad |
| Comparative Example 2 | Poor Coating Properties and Poor Appearance | Bad |
| Comparative Example 3 | Poor Pore Filling and Deterioration | Bad |
| Comparative Example 4 | Poor Coating Properties and Poor Appearance | Bad |
| Conventional Example 1 | Significant Deterioration | Bad |

### [2] Acid Resistance of Tile

### [Examples 6 and 7, Comparative Examples 5 to 9, and Conventional Example 2]

### A. Acid Resistance Treatment of Tile

A number of pores are present on a surface of a polished ceramic tile, a contaminant is likely to infiltrate the pores, and it is difficult to remove an infiltrated contaminant therefrom. In particular, when the tile is used as a floor material, it is difficult to remove mud therefrom. Therefore, the effects of the present invention have been verified using a commercially available unglazed polished tile as a porous body.

First, a mixed solution containing metal oxide particles, alkaline silicate, and water was prepared to fill pores of the unglazed polished tile.

Here, by using particles having a particle distribution shown in Table 3 as corundum particles, the corundum particles, lithium silicate, and water were mixed such that a ratio of the corundum particles, lithium silicate, and water is 60:3:37 (mass%). As a result, a first mixing solution of each of Examples 6 and 7 and Comparative Examples 5 to 7 were prepared.

**[Table 3]**

| | Particle Size Distribution of Corundum Particles | |
|---|---|---|
| | D50 (µm) | D90 (µm) |
| Example 6 | 0.5 | 3 |
| Example 7 | 5 | 10 |
| Comparative Example 5 | 0.3 | 3 |
| Comparative Example 6 | 0.6 | 1 |
| Comparative Example 7 | 10 | 30 |

Next, a surface of the tile was washed with water, the surface was naturally dried, and the surface of the tile was coated with the first mixing solution of each of Examples 6 and 7 and Comparative Examples 5 to 7 using a roller. Then, a residual first mixed solution was removed by a rubber spatula, and the surface was naturally dried. As a result, the pores of the tile was filled with the first mixed solution of each of Examples 6 and 7 and Comparative Examples 5 to 7, and a pore-filled tile of each of Examples 6 and 7 and Comparative Examples 5 to 7 was obtained.

Next, a second mixed solution containing an alkaline zirconium carbonate solution and an aqueous silicate solution was prepared.

Here, by using potassium zirconium carbonate as alkaline zirconium carbonate and using lithium silicate a as a silicate, a mixed aqueous solution (second mixed solution) containing 2 mass% of potassium zirconium carbonate in terms of zirconium dioxide and 0.2 mass% of lithium silicate in terms of silicon dioxide was prepared.

Next, the above-described mixed aqueous solution was coated on a surface of the pore-filled tile of each of Examples 6 and 7 and Comparative Examples 5 to 7 using a roller. After coating, the surface is dried with warm air at 70°C for 1 second. As a result, a tile of each of Examples 6 and 7and Comparative Examples 5 to 7 on which a film was coated was obtained.

In addition, a pore-filled tile of Example 6 on which a film was not coated was set as Comparative Example 8. A tile of Example 6 which was not subjected to the filling of the first mixing solution and whose surface was coated with only the mixed aqueous solution was set as Comparative Example 9. A tile which was not subjected to pore filling and surface coating was set as Conventional Example 2.

### B. Evaluation of Tile

Regarding the tile of each of Examples 6 and 7, Comparative Examples 5 to 9, and Conventional Example 2, the appearance, iron oxide removal performance, and alkali resistance were evaluated.

Evaluation methods are as follows.

### (1) Appearance

The surface of the tile was evaluated by visual inspection.

### (2) Iron Oxide Removal Performance

An iron oxide powder removal test (EN ISO 10545-14) was performed to evaluate the degree (cleanness) of removal of iron oxide. The evaluation was performed on a scale of 1 to 5 according to the evaluation criteria of the above-described iron oxide powder removal test (EN ISO 10545-14). Here, 4 or higher was a passing point.

### (3) Acid Resistance and Alkali Resistance

After the iron oxide powder removal test (EN ISO 10545-14), a chemical resistance test (EN ISO 10545-13) was performed to evaluate acid resistance and alkali resistance. The evaluation was performed on a scale of A to C according to the evaluation criteria of the above-described chemical resistance test (EN ISO 10545-13). Here, A was a passing point.

The evaluation results are shown in Table 4.

**[Table 4]**

| | Appearance | Iron Oxide Removal Performance | Acid Resistance | Alkali Resistance |
|---|---|---|---|---|
| Example 6 | Good | 4 | A | A |
| Example 7 | Good | 5 | A | A |
| Comparative Example 5 | Good | 3 | A | A |
| Comparative Example 6 | Good | 3 | A | A |
| Comparative Example 7 | Good | 3 | A | A |
| Comparative Example 8 | Good | 4 | B | B |
| Comparative Example 9 | Good | 2 | A | A |
| Conventional Example 2 | Good | 1 | B | B |

### [Examples 8 to 18, Comparative Examples 10 to 19, and Conventional Example 3]

### A. Acid Resistance Treatment of Marble

Marble contains calcium carbonate as a major component and thus has a problem in that an acid is extremely likely to infiltrate thereinto. Therefore, the effects of the present invention have been verified using a marble slab as a porous body.

First, a first mixed solution containing metal oxide particles, alkaline silicate, and water was prepared to fill pores of the marble slab.

Here, by using particles in which D50=1 µm and D90=10 µm as corundum particles and using lithium silicate 45 (trade name, manufactured by Nippon Chemical Industrial Co., Ltd.) as lithium silicate, corundum particles, lithium silicate, and water were mixed such that a ratio of the corundum particles, lithium silicate, and water is 50:5:45 (mass%). As a result, a first mixing solution was prepared.

Next, a surface of the marble slab was washed with water, the surface was naturally dried, and the surface of the marble slab was coated with the first mixing solution using a roller. After coating, a residual first mixed solution was removed by polishing, and the surface was naturally dried.

Next, a second mixed solution containing an alkaline zirconium carbonate solution and an aqueous silicate solution was prepared.

Here, by using potassium zirconium carbonate as alkaline zirconium carbonate and using lithium silicate a as a silicate, mixed aqueous solutions (second mixed solutions) were prepared while changing the mass ratio of potassium zirconium carbonate in terms of zirconium dioxide to various values.

Table 5 shows the composition of each of Examples 8 to 18 and Comparative Examples 10 to 19.

**[Table 5]**

| | Potassium Zirconium Carbonate (In Terms Of ZrO₂; mass%) | Lithium Silicate (In Terms Of SiO₂; mass%) | ZrO₂:SiO₂ (mass ratio) |
|---|---|---|---|
| Example 8 | 0.4 | 0 | 100:0 |
| Example 9 | 0.5 | 0.005 | 100:1 |
| Example 10 | 5 | 0.5 | 100:10 |
| Example 11 | 13.5 | 1.5 | 90:10 |
| Example 12 | 7.5 | 7.5 | 50:50 |
| Example 13 | 5 | 0.05 | 100:1 |
| Example 14 | 0.005 | 0.5 | 1:100 |
| Example 15 | 0.5 | 5 | 10:100 |
| Example 16 | 1.5 | 15 | 10:100 |
| Example 17 | 4.5 | 10.5 | 30:70 |
| Example 18 | 0.05 | 5 | 1:100 |
| Comparative Example 10 | 0.5 | 0.004 | 100:0.8 |
| Comparative Example 11 | 16 | 1.6 | 100:10 |
| Comparative Example 13 | 5 | 0.04 | 100:0.8 |
| Comparative Example 14 | 0.005 | 0.4 | 1.25:100 |
| Comparative Example 15 | 0.004 | 0.5 | 0.8:100 |
| Comparative Example 16 | 1.6 | 16 | 10:100 |
| Comparative Example 17 | 5.0 | 10 | 33:67 |
| Comparative Example 18 | 0.04 | 5 | 0.8:100 |
| Comparative Example 19 | 0 | 5 | 0:100 |

Next, a mixed aqueous solution shown in Table 5 was coated on the naturally dried surface of the marble slab using a roller. After coating, the surface is left to stand at room temperature (25°C) for 7 days to be naturally dried. An acid resistance treatment of each of the marble of Examples 8 to 18 to Comparative Examples 10 to 19 was performed.

### B. Evaluation of Marble Slab

Regarding the marble slab of each of Examples 8 and 18, Comparative Examples 10 to 19, and Conventional Example 3, the appearance, iron oxide removal performance, and alkali resistance were evaluated.

The appearance and iron oxide removal performance were evaluated according to the above-described evaluation methods of the tile.

### (1) Acid Resistance

Citric acid having a concentration of 10 mass% was dripped on the surface of the marble slab and was left to stand at room temperature (25°C) for 24 hours. Then, the surface was washed with water, and whether or not the surface deteriorated was evaluated. Here, a state where the surface did not deteriorate was evaluated as "Good", and a state where the surface deteriorated even to a small degree was evaluated as "Bad", (2) Alkali Resistance

Sodium hydroxide having a concentration of 5 mass% was dripped on the surface of the marble slab and was left to stand at room temperature (25°C) for 24 hours. Then, the surface was washed with water, and whether or not the surface deteriorated was evaluated. Here, a state where the surface did not deteriorate was evaluated as "Good", and a state where the surface deteriorated even to a small degree was evaluated as "Bad".

The evaluation results are shown in Table 6.

**[Table 6]**

| | Appearance | Iron Oxide Removal Performance | Acid Resistance | Alkali Resistance |
|---|---|---|---|---|
| Example 8 | Good | 4 | Good | Good |
| Example 9 | Good | 4 | Good | Good |
| Example 10 | Good | 4 | Good | Good |
| Example 11 | Good | 4 | Good | Good |
| Example 12 | Good | 4 | Good | Good |
| Example 13 | Good | 4 | Good | Good |
| Example 14 | Good | 4 | Good | Good |
| Example 15 | Good | 4 | Good | Good |
| Example 16 | Good | 4 | Good | Good |
| Example 17 | Good | 4 | Good | Good |
| Example 18 | Good | 4 | Good | Good |
| Comparative Example 10 | Good | 4 | Poor | Good |
| Comparative Example 11 | Bad (Stickiness is High Due to Excessively High Viscosity of Coating Material) | 4 | Good | Good |
| Comparative Example 13 | Good | 4 | Poor | Good |
| Comparative Example 14 | Good | 4 | Poor | Good |
| Comparative Example 15 | Good | 4 | Good | Poor |
| Comparative Example 16 | Bad (Stickiness is High Due to Excessively High Viscosity of Coating Material) | 4 | Good | Good |
| Comparative Example 17 | Bad (Defective Coating Due to Precipitation Occurring in Coating Material) | 4 | Good | Good |
| Comparative Example 18 | Good | 4 | Good | Poor |
| Comparative Example 19 | Good | 4 | Good | Poor |
| Conventional Example 3 | Good | 1 | Poor | Good |

### INDUSTRIAL APPLICABILITY

A porous article according to the embodiment is obtained by filling pores of at least one principal surface of a porous body with a mixture and coating the filled mixture with a film, the porous body being formed of an inorganic material, the mixture containing metal oxide particles and an alkaline silicate, and the film containing a hydrated compound of zirconium and a silicate. Therefore, an effect of preventing surface contamination is superior, and alkali resistance and acid resistance are also superior. Accordingly, the porous article according to the embodiment is applicable not only to porous bodies such as concrete, stone, and tile but also to various fields where an effect of preventing surface contamination, alkali resistance, and acid resistance are required, and has an extremely high industrial value.

## Claims

1. A porous article comprising a porous body, which is formed of an inorganic material, having at least one principal surface being filled with a mixture containing a metal oxide particle and an alkali silicate, the mixture being formed from a first mixed solution containing the metal oxide particle, the alkali silicate and water,
wherein the filled mixture is coated by a film formed from a second mixed solution containing an aqueous alkaline zirconium carbonate solution and an aqueous silicate solution or a colloidal silica,
wherein the metal oxide particles are α-type aluminum oxide particles having a corundum structure, and
the alkaline silicate is lithium silicate,
a mass ratio (aluminum oxide particles: lithium silicate: water) of the first mixed solution is (45 to 55):(2 to 8):(37 to 53),
a D50 value of a particle size distribution of the aluminum oxide particles is 0.5 µm to 5 µm, and
a D90 value of the particle size distribution of the aluminum oxide particles is 3 µm or more,
the second mixed solution being either
a mixed solution A containing 0.5 mass% to 15 mass% of zirconium in terms of zirconium dioxide and 0.005 mass% to 7.5 mass% of silicate or colloidal silica in terms of silicon dioxide and, when a total mass of zirconium dioxide and silicon dioxide is 100 parts by mass, a mass of silicon dioxide is 1 part by mass to 50 parts by mass, or
a mixed solution B containing 0.005 mass% to 4.5 mass% of zirconium in terms of zirconium dioxide and 0.5 mass% to 15 mass% of silicate or colloidal silica in terms of silicon dioxide, and when the total mass of zirconium dioxide and silicon dioxide is 100 parts by mass, a mass of zirconium dioxide is 1 part by mass to 30 parts by mass.

## Patentansprüche

1. Ein poröser Artikel, umfassend einen aus einem anorganischen Material gebildeten porösen Körper, der mindestens eine Hauptfläche aufweist, die mit einer ein Metalloxid-Partikel und ein alkalines Silikat enthaltene Mischung gefüllt ist, wobei die Mischung aus einer das Metalloxid-Partikel, das alkaline Silikat und Wasser enthaltenden ersten Lösung gebildet wird,
worin die gefüllte Mischung mit einem Film beschichtet wird, der aus einer zweiten gemischten Lösung gebildet wird, die eine wässrige alkaline Zirkoniumkarbonatlösung und eine wässrige Silikatlösung oder ein kolloidales Silikat enthält,
wobei die Metalloxidpartikel Aluminiumoxidpartikel des α-Typs sind, die eine Korundstruktur aufweisen,
das alkaline Silikat ein Lithiumsilikat ist, und
das Massenverhältnis (Aluminiumoxidpartikel: Lithiumsilikat: Wasser) der ersten gemischten Lösung (45 bis 55): (2 bis 8): (37 bis 53) ist;
der D50-Wert der Partikelgrößenverteilung der Aluminiumoxid-Partikel 0,5 µm bis 5 µm, und der D90-Wert der Partikelgrößenverteilung der AluminiumOxidpartikel 3 µm oder mehr beträgt, und
die zweite gemischte Lösung entweder eine gemischte Lösung A mit 0,5 Massenprozent bis 15 Massenprozent Zirkonium als Zirkoniumdioxid und 0,005 Massenprozent bis 7,5 Massenprozent Silikat oder kolloidales Silikat als Siliziumdioxid enthält, und, wenn eine Gesamtmasse Zirkoniumdioxid und Siliziumdioxid 100 Masseanteile ausmacht, eine Masse Siliziumdioxid 1 Masseanteil bis 50 Masseanteile beträgt, oder
oder aus einer gemischten Lösung B ist, die 0,005 Massenprozent bis 4,5 Massenprozent Zirkonium als Zirkoniumdioxid und 0,5 Massenprozent bis 15 Massenprozent Silikat oder kolloidales Silikat als Siliziumdioxid enthält und, wenn die Gesamtmasse Zirkoniumdioxid und Siliziumdioxid 100 Masseanteile ausmacht, eine Masse Zirkoniumdioxid 1 Masseanteil bis 30 Masseanteile beträgt.

## Revendications

1. Article poreux comprenant un cors poreux, formé d'un matériau inorganique, ayant au moins une surface principale remplie d'un mélange contenant une particule d'oxyde métallique et un silicate alcalin, le mélange étant formé à partir d'une première solution mélangée contenant la particule d'oxyde métallique, le silicate alcalin et de l'eau,
dans lequel le mélange de remplissage est revêtu d'un film formé à partir d'une seconde solution mélangée contenant une solution aqueuse de carbonate de zirconium alcalin et une solution aqueuse de silicate ou une silice colloïdale,
dans lequel les particules d'oxyde métallique sont des particules d'oxyde d'aluminium de type α ayant une structure de corindon, et
le silicate alcalin est le silicate de lithium,
un ratio de masse (particules d'oxyde métallique : silicate de lithium : eau) de la première solution mixte est (45 à 55) : (2 à 8) : (37 à 53),
une valeur D50 d'une distribution de taille de particule des particules d'oxyde d'aluminium est 0,5 µm à 5 µm, et
une valeur D90 de la distribution de taille de particule des particules d'oxyde d'aluminium est 3 µm ou plus,
la seconde solution mixte étant soit
une solution mixte A contenant de 0,5% en masse à 15% en masse de zirconium en termes de dioxyde de zirconium et de 0,005% en masse à 7,5% en masse de silicate ou de silice colloïdale en termes de dioxyde de silicium et, lorsqu'une masse totale de dioxyde de zirconium et de dioxyde de silicium est de 100 parties en masse, une masse de dioxyde de silicium est de 1 partie en masse à 50 parties en masse, ou
une solution mélangée B contenant de 0,005% en masse à 4,5% en masse de zirconium en termes de dioxyde de zirconium et de 0,5% en masse à 15% en masse de silicate ou de silice colloïdale en termes de dioxyde de silicium, et lorsque la masse totale de dioxyde de zirconium et de dioxyde de silicium est de 100 parties en masse, une masse de dioxyde de zirconium est de 1 partie en masse à 30 parties en masse.
